(19) Europäisches Patentamt
European Patent Office
Office européen des brevets

(11) **EP 3 076 594 B1**

(12) **EUROPEAN PATENT SPECIFICATION**

(45) Date of publication and mention
of the grant of the patent:
**23.09.2020 Bulletin 2020/39**

(51) Int Cl.:
***H04L 12/24*** *(2006.01)*   ***H04L 12/26*** *(2006.01)*

(21) Application number: **15305476.2**

(22) Date of filing: **31.03.2015**

(54) **NETWORK ANALYSER AND METHOD FOR REMOTE DIAGNOSIS OF NETWORK PROBLEMS**

NETZWERKANALYSATOR UND VERFAHREN ZUR FERNDIAGNOSE VON NETZWERKPROBLEMEN

ANALYSEUR DE RÉSEAU ET PROCÉDÉ DE DIAGNOSTIC À DISTANCE DE PROBLÈMES DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2016 Bulletin 2016/40**

(73) Proprietor: **Alcatel Lucent**
**91620 Nozay (FR)**

(72) Inventors:
• **Dupuis, Nicolas**
  **6041 Gosselies (BE)**
• **Drooghaag, Benoit**
  **6041 Gosselies (BE)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A1- 2 827 535    WO-A2-2006/099223**

• CHOI ET AL: **"Cross-layer error-control with low-overhead ARQ for H.264 video transmission over wireless LANs"**, COMPUTER COMMUNICATIONS, ELSEVIER SCIENCE PUBLISHERS BV, AMSTERDAM, NL, vol. 30, no. 7, 8 April 2007 (2007-04-08), pages 1476-1486, XP022024782, ISSN: 0140-3664, DOI: 10.1016/J.COMCOM.2006.12.027
• HYUNCHUL JOO ET AL: **"QoE-aware mobile IPTV multicast system over WiMAX network"**, CONSUMER COMMUNICATIONS AND NETWORKING CONFERENCE (CCNC), 2012 IEEE, IEEE, 14 January 2012 (2012-01-14), pages 759-764, XP032161024, DOI: 10.1109/CCNC.2012.6181160 ISBN: 978-1-4577-2070-3

**Description**

Field of the Invention

The field of the invention relates to remote diagnosis of a problem occurring in a network during media streaming. Particular embodiments relate to a network analyser, a method and a computer program product for remote diagnosis of a problem occurring in a network during streaming of at least one media file to an end-user receiver via said network.

Background

With the increasing deployment of IPTV (Internet Protocol Television) solutions, Video-On-Demand offers or Triple-play services, both system performance and customer support become more and more exigent, particularly on Digital Subscriber Lines (DSL). The physical (PHY) link, which transports the information through wirelines up to the end user, is known to be the bottleneck for the Quality of Service (QoS). Hence, it is important to be able to remotely diagnose (sources of) physical problems and take action to improve the performance. This helps the operators to improve overall quality as well as to save money and time by not requiring human interventions for all types of requests. However, existing methods for such diagnosis are limited and ineffective.

EP 2 827 535 A1 discloses a method for isolated anomaly detection in large-scale audio/video/data processing systems, operating in an automatic manner, without resulting in overloading an anomaly management system in case of large-scale anomalies occurring, without relying on user intervention.

WO 2006/99223 A2 discloses a decoder architecture for optimized error management in streaming multimedia.

Summary

It is an object of embodiments of the present invention to quantify Quality of Experience impact of the problem over time.

According to a first aspect of the invention, there is provided a network analyser for remote diagnosis of a problem occurring in a network during streaming of at least one media file to an end-user receiver via said network; wherein said network analyser is communicatively coupled to said network. Said network analyser comprises a collection module and a processing module. Said collection module is communicatively coupled to said end-user receiver. Said collection module is configured for obtaining from said end-user receiver at least one media decoding statistic, pertaining to application-layer decoding of said at least one media file at said end-user receiver. Said processing module is configured for determining a quality of experience metric, based on said at least one media decoding statistic. Said quality of experience metric quantitatively represents a relation between a duration of said decoding and a number of media decoding errors during said duration of said decoding.

In this specification, a 'media decoding statistic' may be taken to refer to 'a numerical value (e.g. an error counter or several error counters) for a parameter related to decoding a file'.

In this specification, a 'duration of decoding' may be taken to refer to 'an amount of time during which said media file is received (i.e. content frames of said media file are collected) from a streaming source, and during which a receiver decodes said media file'.

In this specification, a 'media decoding error' may be taken to refer to 'an anomaly occurring during the decoding of a media file, wherein one or more content frames of the media file have been lost or damaged during streaming, such that they cannot be reproduced, or such that they can only be reproduced using loss concealment'.

It will be understood that 'Quality of Experience', 'quality of experience' and 'QoE' all refer to the same. Likewise, it will be understood that 'Quality of Service', 'quality of service' and 'QoS' also all refer to the same.

In this manner, the network analyser allows to quantify Quality of Experience impact of the problem over time. By obtaining from the end-user receiver (i.e. a computing system close to where the end-user perceives or will perceive the at least one media file after decoding, such as a Set-Top Box, STB) the at least one media decoding statistic which pertains to application-layer decoding of the at least one media file, the network analyser can base its diagnosis on statistics that are relevant to the actual Quality of Experience as it is perceived or will be perceived by the end-user. By quantitatively representing the relation between the duration of the decoding and the number of media decoding errors during that duration, the network analyser can diagnose the problem over a period of time, and in particular quantitatively summarise the occurrence and impact of error events over time, which is advantageous to allow easy interpretation.

Other objects of embodiments of the present invention are to use the diagnosis in order to troubleshoot and/or optimise performance (e.g. by stabilizing lines).

In an embodiment, the network analyser comprises a monitoring module and an optimisation module. Said monitoring module is configured for determining whether said quality of experience metric exceeds a quality threshold. Said optimisation module is configured for preventing troubleshooting of said network, if it is determined that said quality of experience metric exceeds said quality threshold.

In this manner, performance of the network is optimised, since troubleshooting the network might be detrimental when the Quality of Experience exceeds a quality threshold (e.g. a pre-determined threshold representing a sufficiently good Quality of Experience according to regulations or agreements - such that exceeding that pre-determined threshold implies that the end-user has a good Quality of Experience). Using the quality of experience metric resulting from the diagnosis thus helps to improve the performance of the network.

In an embodiment, the network analyser comprises a monitoring module configured for determining whether said quality of experience metric exceeds a quality threshold. The network analyser also comprises an optimisation module configured for, if it is determined that said quality of experience metric does not exceed said quality threshold, troubleshooting said network.

In this manner, the network may be troubleshot when this is especially advantageous, namely when the Quality of Experience does not exceed a quality threshold (e.g. a pre-determined threshold representing a sufficiently good Quality of Experience according to regulations or agreements). Using the Quality of Experience metric resulting from the diagnosis thus helps to troubleshoot (and therefore improve the performance of) the network.

In an embodiment, said network comprises a first network part and a second network part, said second network part comprising at least said end-user receiver. Said optimisation module is configured for determining whether a physical-layer problem exists in said first network part. Said optimisation module is also configured for, if it is determined that a physical-layer problem does not exist in said first network part, preventing troubleshooting of said first network part and proposing troubleshooting of said second network part. Also, said optimisation module is configured for, if it is determined that a physical-layer problem exists in said first network part, troubleshooting said first network part. Said troubleshooting of said first network part is performed by: obtaining at least one physical parameter value, pertaining to said streaming via said first network part; locating said physical-layer problem in said first network part, based on said at least one physical parameter value; and adjusting at least one physical parameter corresponding to said at least one physical parameter value, in order to mitigate said located physical-layer problem.

In this manner, the network analyser can discriminate between domain issues, in order to prevent expensive intervention when a problem is actually attributable to another part of the network than the part of the network for which the operator of the streaming service is responsible.

In an embodiment, said at least one media decoding statistic comprises at least one of the following: a number of error events, comprising a number of content frames that could not be reproduced (i.e. content frames that are missing from the decoding) by said end-user receiver for said at least one media file and comprising a number of content frames reproduced by said end-user receiver for said at least one media file, for which reproduced content frames information was missing and loss concealment was applied by said end-user receiver; a normalised number of error events, comprising said number of error events relative to a frame rate of said at least one media file; and a mean time between occurrences of artefacts, comprising a duration of said decoding relative to said number of error events or to said normalised number of error events, wherein said duration of said decoding comprises a number of seconds during which content frames were received for said at least one media file (in other words, the time that the at least one media file has been streamed).

In this manner, the network analyser can quantitatively represent a relation between a duration of said decoding and a number of media decoding errors during said duration of said decoding, using the number of error events, the normalised number of error events, and/or the mean time between occurrences of artefacts (also: mean time between artefacts). Where necessary, an implicit duration of the decoding may be assumed.

In this specification, 'artefacts' are 'end-user noticeable distortions of the decoded at least one media file'. Example artefacts are lags, freezes, desyncs, noise or other degradations of the media (in particular video) stream.

In an embodiment, said at least one media decoding statistic comprises at least one first media decoding statistic pertaining to a first type of media and at least one second media decoding statistic pertaining to a second type of media. Said first type of media is associated with a first importance for decoding and said second type of media is associated with a second importance for decoding which is lower than said first importance. Said first type of media and said second type of media are associated with different weighting factors indicating their respective relative importance, when determining said quality of experience metric. In other words, the second type of media is less critical to decoding (i.e. more susceptible to loss concealment techniques) than the first type of media. In a further developed embodiment, said first type of media is intra-coded and said second type of media is inter-coded. In another further developed embodiment, said first type of media comprises video and said second type of media comprises audio. The skilled person will understand that these further developed embodiments can be combined to lead to four types of media with corresponding importance and corresponding weighting factors when determining the quality of experience metric.

In this manner, is it possible to more accurately quantify the quality of experience taking into account the different impacts of different media types that have different importance to decoding.

In an embodiment, said quality of experience metric is representative for a single stream of at least one media file. Alternatively, said quality of experience metric is representative for a plurality of streams of at least one media file, and wherein optionally each stream of said plurality of streams is associated with a weighting factor indicating said stream's relative importance.

According to another aspect of the invention, there is provided a method for remote diagnosis of a problem occurring in a network during streaming of at least one media file to an end-user receiver via said network. Said method comprises: obtaining at least one media decoding statistic, at a computing system, pertaining to application-layer decoding of said at least one media file at said end-user receiver; and determining a quality of experience metric, at said computing system, based on said at least one media decoding statistic. Said quality of experience metric quantitatively represents a relation between a duration of said decoding and a number of media decoding errors during said duration of said decoding.

The skilled person will understand that the hereinabove described considerations and advantages also apply for embodiments of the method, *mutatis mutandis.*

In a particular embodiment, the computing system comprises a network analyser, preferably a network analyser as described above. In an alternative particular embodiment, the computing system comprises a network device communicatively coupled to a network analyser.

In an embodiment, the method comprises at said computing system: determining whether said quality of experience metric exceeds a quality threshold; and if it is determined that said quality of experience metric exceeds said quality threshold, preventing troubleshooting of said network.

In an embodiment, the method comprises at said computing system: determining whether said quality of experience metric exceeds a quality threshold; and if it is determined that said quality of experience metric does not exceed said quality threshold, troubleshooting said network.

In an embodiment, said network comprises a first network part and a second network part, said second network part comprising at least said end-user receiver. Troubleshooting said network comprises: determining whether a physical-layer problem exists in said first network part. Said troubleshooting of said network also comprises, if it is determined that a physical-layer problem does not exist in said first network part, preventing troubleshooting of said first network part and proposing troubleshooting of said second network part. Also, said troubleshooting of said network comprises, if it is determined that a physical-layer problem exists in said first network part, troubleshooting said first network part. Said troubleshooting of said first network part comprises: obtaining at least one physical parameter value, pertaining to said streaming via said first network part; locating said physical-layer problem in said first network part, based on said at least one physical parameter value; and adjusting at least one physical parameter corresponding to said at least one physical parameter value, in order to mitigate said located physical-layer problem.

In an embodiment, said at least one media decoding statistic comprises at least one of the following: a number of error events, comprising a number of content frames that could not be reproduced by said end-user receiver for said at least one media file and comprising a number of content frames reproduced by said end-user receiver for said at least one media file, for which reproduced content frames information was missing and loss concealment was applied by said end-user receiver; a normalised number of error events, comprising said number of error events relative to a frame rate of said at least one media file; and a mean time between occurrences of artefacts, comprising a duration of said decoding relative to said number of error events or to said normalised number of error events, wherein said duration of said decoding comprises a number of seconds during which content frames were received for said at least one media file.

In an embodiment, said at least one media decoding statistic comprises at least one first media decoding statistic pertaining to a first type of media and at least one second media decoding statistic pertaining to a second type of media. Said first type of media is associated with a first importance for decoding and said second type of media is associated with a second importance for decoding which is lower than said first importance. Said first type of media and said second type of media are associated with different weighting factors indicating their respective relative importance, when determining said quality of experience metric. In other words, the second type of media is less critical to decoding (i.e. more susceptible to loss concealment techniques) than the first type of media. In a further developed embodiment, said first type of media is intra-coded and said second type of media is inter-coded. In another further developed embodiment, said first type of media comprises video and said second type of media comprises audio. The skilled person will understand that these further developed embodiments can be combined to lead to four types of media with corresponding importance and corresponding weighting factors when determining the quality of experience metric.

In this manner, is it possible to more accurately quantify the quality of experience taking into account the different impacts of different media types that have different importance to decoding.

In an embodiment, said quality of experience metric is representative for a single stream of at least one media file. Alternatively, said quality of experience metric is representative for a plurality of streams of at least one media file, and wherein optionally each stream of said plurality of streams is associated with a weighting factor indicating said stream's relative importance.

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, *mutatis mutandis.*

In a preferred embodiment of said network analyser and/or of said method, said at least one media decoding statistic comprises at least one, preferably at least two, of the following media decoding statistics, each relating to a sample interval:

- a number of seconds during which content (video content, audio content, or both) data was collected for said at least one media file;
- a frame rate at which said end-user receiver plays any video content of said at least one media file;
- a number of video frames that could not be reproduced by said end-user receiver for said at least one media file;
- a number of video frames reproduced by said end-user receiver for said at least one media file, for which video frames information was missing and loss concealment was applied;
- a number of intra-coded video frames that could not be reproduced by said end-user receiver for said at least one media file;
- a number of intra-coded video frames reproduced by said end-user receiver for said at least one media file, for which video frames information was missing and loss concealment was applied;
- a number of predictive video frames that could not be reproduced by said end-user receiver for said at least one media file;
- a number of predictive video frames reproduced by said end-user receiver for said at least one media file, for which video frames information was missing and loss concealment was applied;
- a number of bi-predictive video frames that could not be reproduced by said end-user receiver for said at least one media file;
- a number of bi-predictive video frames reproduced by said end-user receiver for said at least one media file, for which video frames information was missing and loss concealment was applied;
- a number of audio decoding errors for said at least one media file; and
- a number of AV (Audio-Video) resynchronizations performed by said end-user receiver, for said at least one media file.

In a further developed preferred embodiment of said network analyser and/or of said method, said at least one media decoding statistic comprises one or more of the following TR-135 (Broadband Forum Technical Recommendation 135) media decoding statistics: SampleSeconds, FrameRate, LostFrames, ConcealedFrames, ILostFrames, IConcealedFrames, PLostFrames, PConcealedFrames, BLostFrames, BConcealedFrames, AudioDecodingErrors, and AVResynchCounter.

In a further developed embodiment of said network analyser and/or of said method, said quality of experience metric quantitatively represents a relation between a time period of one day and a number of media decoding errors during said time period of one day.

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

Figure 1 illustrates schematically a setup including an embodiment of a network analyser according to the present invention;
Figure 2A illustrates schematically an embodiment of a network analyser according to the present invention;
Figure 2B illustrates schematically an embodiment of a method according to the present invention; and
Figure 3 illustrates schematically another setup including an embodiment of a network analyser according to the present invention.

Description of Embodiments

With the increasing deployment of IPTV (Internet Protocol Television) solutions, Video-On-Demand offers or Triple-play services, both system performance and customer support become more and more exigent, particularly on Digital Subscriber Lines (DSL). The physical (PHY) link, which transports the information through wirelines up to the end user, is known to be the bottleneck for the Quality of Service (QoS). Hence, it is important to be able to remotely diagnose (sources of) physical problems and take action to improve the performance. This helps the operators to improve overall quality as well as to save money and time by not requiring human interventions for all types of requests.

Moreover, technological evolution tends to push the signal bandwidth of DSL lines higher and higher. While a decade ago traditional ADSL (Asymmetric DSL) technology used frequencies up to 1.1 MHz, the current VDSL2 (Very-high-bit-rate DSL 2) technology can be applied up to 17 or even 30MHz. Also, emerging DSL technologies like VDSL2 Vectoring, G.INP (Impulse Noise Protection) and G.Fast, which offer cutting-edge concepts in order to offer extra performances, approach the limits of the physical layer. In the end, the extensive use of those higher frequencies as well as of more and more advanced solutions to increase performance make the DSL link more sensitive to disturbances. Having a computing system (e.g. a 5530 Network Analyzer) which is able to monitor, diagnose and propose dedicated repair actions for each of these technologies, gains importance for operators in order to troubleshoot their issues.

Among others, a particular feature of the 5530 Network Analyzer is Dynamic Line Management (DLM), which is able to monitor the line performance and to take actions in order to provide better PHY quality of service. The principle of the DLM is based on a dynamic assessment and monitoring of the stability and QoS of a line that are used to take the most suitable action on the PHY parameter in order to guarantee a good DSL stability and QoS for the line. Hence, DLM provides the line with the highest bitrate performance under this high stability/QoS condition. By contrast, when a line gets unstable, in order to restore the PHY stability, actions are taken, usually with some direct effects on the speed (bitrate) and/or reactivity (latency). It is therefore important to suitably assess the stability of a line to really improve its quality of service and to avoid any decrease in the end-user's Quality of Experience (QoE). (E.g. if a fairly stable line has been classified as unstable, although the end-user does not notice any practical impacts on her Quality of Experience, the DLM will take actions to reduce the bitrate and/or lower the reactivity of the line. This leads to a decrease of the offered Quality of Experience, i.e. to decreased end-user satisfaction.)

To assess the QoS and QoE of a line, for example to establish whether a line is stable or not, metrics and associated thresholds have been defined. These metrics are the Mean Time Between Errors (MTBE) and the Mean Time Between Resynchronizations (MTBR). MTBE describes the mean time that a line has to wait before its PHY service is being degraded by corrupted symbols, i.e. by PHY symbols containing impacting errors, for example because of impulse noise. MTBR describes the mean time between successive spontaneous resynchronization of the modems, caused by a weak quality of the link. In the context of G.INP, when a line gets impacted and symbols get corrupted, retransmission at the PHY-layer allows to recover from a significant amount of corrupted data frames. However, these retransmissions of corrupted information can consume a significant part of the available bandwidth. This is typically expressed in terms of drops of Error-Free Throughput (EFTR), i.e. drops of the useful bitrate that is available for new information.

Existing methods tend to assess the PHY-layer's quality of transmission, using different error counters or PHY-layer QoS metrics, to quantify how much impact the PHY-layer experiences. Secondly, from these PHY-QoS estimations, using simple or more elaborate models, some extrapolations are proposed to derive the potential impact that such PHY-layer degradations can induce on the end-user's Quality of Experience, for instance on her video streams. In the following paragraphs, a number of PHY-layer QoS metrics / estimators are discussed.

Resynchronization & spontaneous resynchronization: A first counter is incremented when a line experiences a resynchronization at the DSL layer. An improvement of such a counter would be to count only the spontaneous resynchronizations, i.e. the resynchronizations that have not been performed on purpose, e.g. as opposed to powering down the modems.

CV, ES counters: While estimating the QoS, the amount of code-corrupted symbols or the amount of errored seconds is taken into account. For that purpose, the Code Violation counter as well as the Errored Seconds counter are incremented as soon as a coding issue at the PHY-layer is detected and not corrected.

SES counter: Originally, the Severely Errored Seconds (SES) counter counted the number of seconds during which either:

- at least 18 Code Violations (CV) have been observed; or
- the noise margin dropped below the configured minimum noise margin.

In the context of G.INP, the SES counter has been adapted in order to also count some drops of Error-Free Throughput. The SES counter in G.INP is incremented each time the EFTR goes below half of the Expected Throughput. As the ETR itself depends on certain configuration parameters (ShineRatio and min_INP_REIN) but also on the Net Data Rate (NDR) (i.e. the actual bitrate), this makes the SES threshold (=ETR/2) dependent on both the line configuration and the actual bitrate.

In the context of G.INP, a number of additional parameters and metrics have been proposed in order to detect and quantify drops in the Error-Free Throughput, as discussed in the following paragraphs.

LEFTRS counter: The Low Error-Free Throughput Seconds (LEFTRS) counter has been introduced by the G.INP standard and is incremented each time a Low Error-Free Throughput event is detected. By definition, a Low Error-Free Throughput event is detected when the EFTR, averaged over one second, is below a given threshold. The default threshold lies at $0.998*ETR$, but it can be reconfigured as a fraction of the NDR. Considering the default threshold, the LEFTRS counter provides information about the amount of time during which the EFTR was below the ETR. As for the SES counter, the threshold for triggering incrementation of the LEFTRS counter depends on the ETR, and hence also on the actual NDR and the INP configuration.

MTBR and MTBE: In order to assess the Quality of Service (QoS) and/or the Quality of Experience (QoE) of a line, monitoring the QoS over time and statistical analysis thereof are advantageous compared to simple error counters. Therefore, estimation over a time period is desirable and for that purpose, QoS and QoE metrics, such as MTBE and MTBR, have been defined.

In the context of line troubleshooting and optimisation, line stability is usually measured by counting the number of CPE spontaneous resynchronization and the number of transmission errors (Coding Violations - CVs). The metrics that are typically used are the Mean Time Between Resynchronization (MTBR) and the Mean Time Between Errors (MTBE), obtained by dividing the observation interval duration respectively by the number of spontaneous resynchronizations or the number of CVs that occurred during this interval.

It is noted that in the MTBE computation, an error event usually corresponds to one CV. However, a more general formulation can consider that an error event is a combination of CV, ES (Errored seconds) and SES (Severely Errored seconds). Hence, the presence of ES and SES can also be taken into account in the MTBE computation. This is formalised below:

$$MTBE = \frac{showtime\ (T)}{ErrorEvent\ (T)},$$

$$ErrorEvent = w_1 CV(T) + w_2 ES(T) + w_3 SES(T)$$

$$MTBR = \frac{showtime\ (T)}{Resynchronization(T)}$$

The purpose of these methods and estimators is to be able to estimate, from the PHY-layer, how good the communication is. Therefore, it is assumed that some impact at the PHY-layer (in terms of DSL corrupted symbols/frames and/or some transient limitations of the available bandwidth) can be extrapolated to the real end-to-end QoE perceived by the end-user (for example while watching some IPTV streams or video on demand). However, extrapolating the impact of some corrupted DSL data frame on the real QoE as perceived by the end-user is not a simple problem (especially in the context of G.INP) and may lead to (potentially large) inaccuracies, depending on the hypotheses made and/or the model used.

Simple models have been proposed in order to analyse impact on the end-user QoS and QoE. A first model defines certain thresholds, for the MTBE and MTBR, e.g. as presented through these formulae:

| STABLE: | $MTBE(T) > \theta_s$ | and | $MTBR(T) > \Gamma_s$ |
|---|---|---|---|
| RISKY: | $\theta_s > MTBE(T) > \theta_u$ | or | $\Gamma_s > MTBR(T) > \Gamma_u$ |
| UNSTABLE: | $MTBE(T) < \theta_u$ | or | $MTBR(T) < \Gamma_u$ |

Beneath these thresholds, it is presumed that the end-user perceives or can perceive a degraded or severely degraded Quality of Experience. In practice, this means that if the Mean Time Between Errors is low, say if an error event occurs every minute, the Quality of Experience is reported as degraded. These thresholds can be adapted depending on the subscribed service, for instance setting higher thresholds for video service than for HSI or VoIP.

However, a major drawback is that these estimators are based on error events occurring at the PHY-layer, whereas PHY error events do not necessarily impact the end-user's perception of the media stream. For example, in the context of Triple-Play, the video stream can remain healthy while only some HSI traffic can be impacted slightly, without a noticeable impact for the end-user. Moreover, some PHY error events can be compensated by upper-layer protocol mechanisms (such as retransmission mechanisms), buffers (e.g. in the context of G.INP). Finally, an error event can occur while the end-user is not experiencing any content, and can therefore be irrelevant.

More complex feed-forward extrapolation models (i.e. inferring about the impact of PHY-layer error events on the application layer) have also been proposed, for instance regarding impact of PHY-layer error events on video content. However, as for the simpler model presented before, this approach still suffers from similar drawbacks. For example, the drawback remains that PHY-error events do not always impact the experienced media stream (e.g. in the context of Triple-Play, the video stream can remain healthy while only some HSI traffic can be impacted slightly, without a really noticeable impact for the end-user). Moreover, with the growing market of home devices, the amount of requested content passing through the DSL pair at the same time, requesting multiple types of content (video, voice, data) and/or streams (HD, SD, using potentially different encoding methods), has significantly increased. Therefore, it is hard to predict the real impact of DSL PHY-errors on each of them from a model perspective and therefore it is challenging for a feed-forward method to estimate the real Quality of Experience of the end-users.

In contrast, embodiments of the present invention are at least in part based on a different approach. Instead of extrapolating some potential impact on the end-user Quality of Experience, embodiments of the invention, in the context of media, in particular video (IPTV, Video-on-Demand, Video-over-the-Top,...), directly make use of the end-user receiver's (e.g. a Set-Top Box or some such device) error counters/statistics to compute a reliable estimation of her QoE. As such, the errors that really occur during (decoding of) her video session and that really impact the requested (streamed or recorded) video stream are taken into account. Thereby, a more reliable estimate of the end-to-end end-user Quality of Experience is made possible, in particular in the context of video. Particular embodiments of the invention make use of a BBF (Broadband Forum) technical recommendation (TR), specifically TR-135.

By quantifying the Quality of Experience as it is really experienced by the end-users, regardless of which PHY-layer (DSL, GPON (Gigabit Passive Optical Networks),...) technology is used, optionally regardless of the nature of the multimedia content, and optionally regardless of the number of streams that is requested. An advantage thereof is that it is not necessary anymore to infer the potential impact of DSL error events on the end-user's experience, but that it is possible to actually quantify the Quality of Experience, on the device she is using.

Also, since it is not necessary to use a model (simple or more complex) for extrapolation, time is saved in the tuning and deployment of the network analyser.

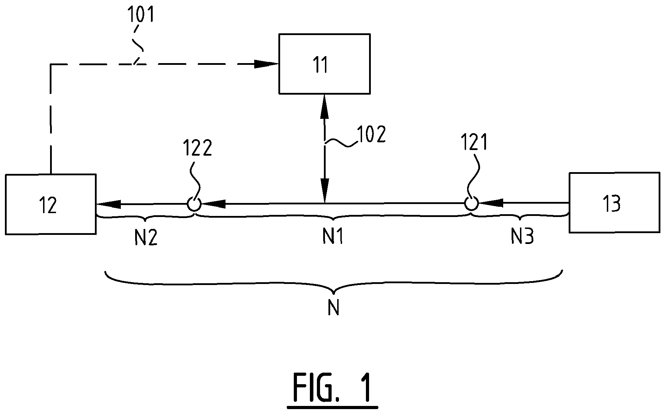

Figure 1 illustrates schematically a setup including an embodiment of a network analyser 11 according to the present invention. The setup further comprises an end-user receiver 12 and a media source 13. The media source 13 streams one or more media files to the end-user receiver, which may for example be a Set-Top Box, via a network N. In this exemplary setup, the network comprises a first intermediate node 121 and a second intermediate node 122. The part of the network N between the first intermediate node 121 and the second intermediate node 122 is indicated N1. The part of the network N between the second intermediate node 122 and the end-user receiver 12 is indicated N2. The part of the network N between the source 13 and the first intermediate node 121 is indicated as N3. Network part N1 may comprise one or more physical-layer links, for which an operator is responsible. Network part N2 may comprise one or more other physical-layer links, for which the operator is not responsible. In practice, the exemplary setup may for example be used to stream IPTV video over network part N2 comprising a combination of DSL, Ethernet Cat. 5/6 cable and/or GPON optical fibre. Typically, the DSL pair represents the weakest physical-layer link, compared to the others.

In this exemplary setup and configuration, making the assumption that PHY-layer error events (presence of CV, ES, SES, LEFTRS, low minEFTR and therefore low MTBE) either impact the experienced video stream or impact similarly the requested SD (Standard Definition) or HD (High Definition) channel is not reliable.

For this example, it is assumed that a media file comprising video multimedia content is streamed. It is recommended in the TR-135 by the BBF (Broadband Forum), that end-user receivers (e.g. home devices like a Set-To-Box (STB)) should implement media decoding statistics, in particular audio/video decoder application-layer statistics, in particular per stream instance. In particular, for each video stream requested by the current device (for example the STB direct and/or recorded streams), some statistics about the upper-layer quality of the decoding are computed. Some of the media decoding statistics defined in TR-135 are: SampleSeconds, FrameRate, LostFrames (all frames), ConcealedFrames (all frames), ILostFrames, IConcealedFrames, PLostFrames, PConcealedFrames, BLostFrames, BConcealedFrames, AudioDecodingErrors, and AVResynchCounter (optional).

For reference, an I-frame is an 'Intra-coded picture', in effect a fully specified picture, like a conventional static image file. P-frames and B-frames hold only part of the image information, so they need less space to store than an I-frame and thus improve video compression rates.

For reference, a P-frame ('Predicted picture') is an inter-coded picture, and holds only the changes in the image from the previous frame. For example, in a scene where a car moves across a stationary background, only the car's movements need to be encoded. The encoder does not need to store the unchanging background pixels in the P-frame, thus saving space. P-frames are also known as delta-frames.

For reference, a B-frame ('Bi-predictive picture') is an inter-coded picture, and uses the differences between the current frame and both the preceding and following frames to specify its content.

The network analyser 11 comprises a collection module 21 (not shown) and a processing module 22 (not shown). The collection module 21 is communicatively coupled to the end-user receiver 12 and is configured for obtaining 101 from that end-user receiver 12 at least one media decoding statistic, pertaining to application-layer decoding of said at least one media file at said end-user receiver 12. Preferably, one or more of the above described TR-135 media decoding statistics are obtained 101. The processing module 22 is configured for determining a quality of experience metric, based on said at least one media decoding statistic. In order to classify the impact of error events, the quality of experience metric quantitatively represents a relation between a duration of said decoding and a number of media decoding errors during said duration of said decoding.

In a further developed embodiment, the network analyser 11 may be configured to interact 101 with the network N, in particular with the first network part N1. This interaction 101 may comprise troubleshooting (of the PHY-layer), or optimisation (of the PHY-layer), or other management functionality (e.g. analysing domain responsibility, and/or offering diagnosis support).

The network analyser 11 is preferably located remotely from the end-user receiver 12; in other words, not inside the client premises of the end-user. Nevertheless, in some embodiments, the network analyser 11 may be located near to or even within the end-user receiver 12; in other words, inside the client premises of the end-user (e.g. within the second network part N2) or even inside the end-user receiver 12.

In this embodiment, the network analyser 11 obtains information (media decoding statistics) that is (are) registered in home devices (like end-user receiver 12; e.g. STB, SmartTV, Over-the-Top TV-Boxes, decoders,...), preferably home devices that implement TR-135 or another standard that exposes such media decoding statistics. From these audio/video decoder application layer statistics per stream instance, a quality of experience metric (viz. MTBA for Mean Time Between Artefacts) is determined, allowing a more reliable estimate of the end-user Quality of Experience. Such a quality of experience metric can for example be formalised as follows:

$$ErrorEvent_{video,simple}[i] = \frac{w_1 \, LostFrames[i] + w_2 \, ConcealedFrames[i]}{FrameRate[i]}$$

$$MTBA_{video,simple}[i] = \frac{SampleSeconds[i]}{ErrorEvent_{video,simple}[i]}$$

Where i is the multimedia (audio/video) stream of interest and where MTBA[i] is a quality of experience metric quantitatively representing a relation between a duration of the decoding and a number of media decoding errors during that duration. MTBA[i] is preferably expressed in seconds. This means that the ErrorEvent metric represents the amount of lost and corrupted (concealed) video frames per second (due to the compensation with the frame rate). In this particular example, the use of weighting factors $w_1$-$w_2$ allows to take into account more impact for lost frames than for (partially) corrupted frames. The Mean Time Between Artefacts is the inverse of the amount of seconds of video errors during the video session or, in other words, the average time of occurrence of error events during (the decoding of) the current video session. This quality of experience metric allows to reliably reckon the visual errors that occur during the time of the experience.

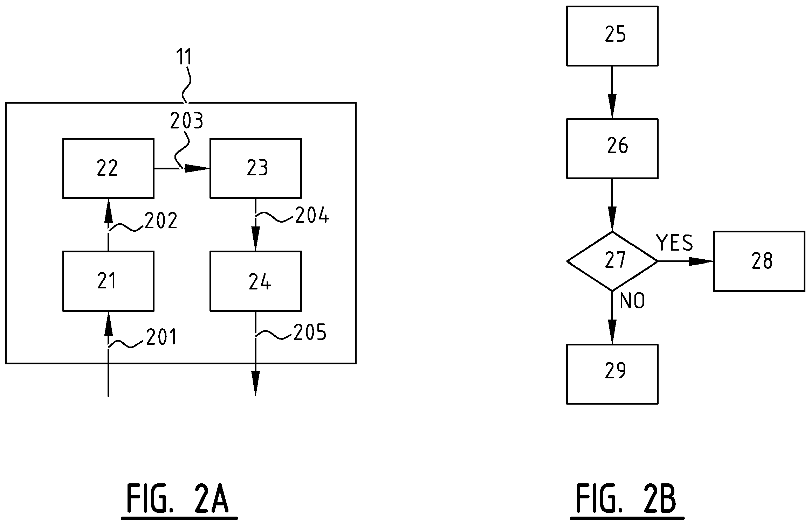

Figure 2A illustrates schematically an embodiment of a network analyser 11 according to the present invention. The network analyser 11 is suitable for remote diagnosis of a problem occurring in a network during streaming of at least one media file to an end-user receiver via said network. The network analyser 11 comprises a collection module 21, and a processing module 22.

The collection module 21 is communicatively coupled to the end-user receiver (not shown). The collection module 21 is configured for obtaining 201 from said end-user receiver at least one media decoding statistic, pertaining to application-layer decoding of said at least one media file at said end-user receiver. The processing module 22 is configured for determining a quality of experience metric, based on said at least one media decoding statistic (e.g. obtained 202 from said collection module 21). The quality of experience metric quantitatively represents a relation between a duration of said decoding and a number of media decoding errors during said duration of said decoding.

Optionally, the network analyser 11 may comprise a monitoring module 23, and an optimisation module 24. The monitoring module 23 is configured for determining whether said quality of experience metric (e.g. obtained 203 from said processing module 22) exceeds a quality threshold. The optimisation module 24 is configured for preventing troubleshooting 205 of said network, if it is determined that said quality of experience metric (e.g. obtained 204 from said monitoring module 23) exceeds said quality threshold. Additionally or alternatively, the optimisation module 24 is configured for troubleshooting 205 said network, if it is determined that said quality of experience metric does not exceed said quality threshold.

Figure 2B illustrates schematically an embodiment of a method according to the present invention. The method is for remote diagnosis of a problem occurring in a network during streaming of at least one media file to an end-user receiver via said network. The method comprises steps 25 and 26. Step 25 represents obtaining at least one media decoding statistic, at a computing system, pertaining to application-layer decoding of said at least one media file at said end-user receiver. Step 25 may comprise obtaining or implicitly deriving the duration of said streaming. Step 26 represents determining a quality of experience metric, at said computing system, based on said at least one media decoding statistic. Said quality of experience metric quantitatively represents a relation between a duration of said decoding and a number of media decoding errors during said duration of said decoding.

Optionally, the method may comprise steps 27-29. Step 27 represents determining whether said quality of experience metric exceeds a quality threshold. If it is determined that said quality of experience metric exceeds (YES) said quality threshold, step 28 of preventing troubleshooting of said network may be performed. If it is determined that said quality of experience metric does not exceed (NO) said quality threshold, step 29 of troubleshooting said network may be performed.

Further, in video encoding and compression, not every frame actually carries the same amount of information (i.e. some frames have different relative importance). For instance, the P-frames are computed from I-frames, while B-frames are computed from I-frames and P-frames. Having some erroneous or discarded I-frame has therefore much more impact than having some erroneous or discarded P-frame or B-frame. In other words, not every video frame may lead to similar visual artefacts. For instance, when an I-frame is lost, some previous and/or next frame can get corrupted as well, since (a part of) their information is computed from the I-frames. In this exemplary embodiment, the different types of frames are weighted differently using weighting factors $w_1$-$w_6$ for lost and corrupted frames for I-frames, P-frames and B-frames respectively, since they (may) lead to different severity of visual artefacts:

$$
\begin{aligned}
\llbracket ErrorEvent \rrbracket\_{(video,advanced)}[i] \\
= (w\_1\, ILostFrames[i] + w\_2\, IConcealedFrames[i] + w\_3\, PLostFrames[i] \\
+ w\_4\, PConcealedFrames[i] + w\_5\, BLostFrames[i] + w\_6\, BConcealedFrames\,)/FrameRate[i]
\end{aligned}
$$

The presence of audio artefacts in the multimedia stream i may also be evaluated, using the number of audio decoding errors and the audio rate (in order to convert from frames to seconds), as follows:

$$ ErrorEvent_{audio}[i] = \frac{AudioDecodingErrors[i]}{AudioRate[i]} $$

$$ MTBA_{video,advanced}[i] $$

$$ = \frac{SampleSeconds[i]}{w_{video}ErrorEvent_{video,advanced}[i] + w_{audio}ErrorEvent_{audio,advanced}[i]} $$

In this exemplary embodiment, in the determining of the MTBA[i], the video ErrorEvent metric and the audio ErrorEvent metric are weighted differently using weighting factors $w_{video}$ and $w_{audio}$. The MTBA[i] is preferably expressed in seconds.

This embodiment allows to quantify the Quality of Experience during the time (i.e. duration) of a multimedia (i.e. comprising video and audio) session, being robust to any type of transmission technologies and protocols, to any type of encoding techniques as well as to any type of multimedia devices implementing the TR-135 recommendations.

With the growing market of home devices and type of multimedia content, it has become possible to, say, watch video streams of different natures on different types of devices. Moreover, several video contents (i.e. content streams) can be streamed on several Set-Top Boxes (IPTV) while HSI (data) content can be requested by other devices. In this Triple-Play environment, it is challenging to be able to assess properly the global Quality of Experience of the end-users. In another embodiment of the method according to the present invention, the QoE evaluation is therefore extended to all the requested multimedia sessions occurring for all devices. Formally, this third embodiment takes into account all the multimedia sessions [i] of some set of multimedia sessions T, triggered by the same or different devices, in order to compute a global end-user QoE metric:

$$ MTBA_{all}(T) = \sum_{i \in T} \frac{SampleSeconds[i]}{w_{video}ErrorEvent_{video,advanced}[i] + w_{audio}ErrorEvent_{audio}[i]} $$

In some embodiments, as here, all the streams i (i.e. separate sessions i, depending for example on the device) may have the same importance. In other embodiments, they can be weighted differently.

In further developed embodiments, using a daily metric (i.e., having the quality of experience metric represent a relation between a time period of one day and a number of media decoding errors during said time period of one day) allows for daily optimisation or troubleshooting, thereby easily fitting into operators' schedules.

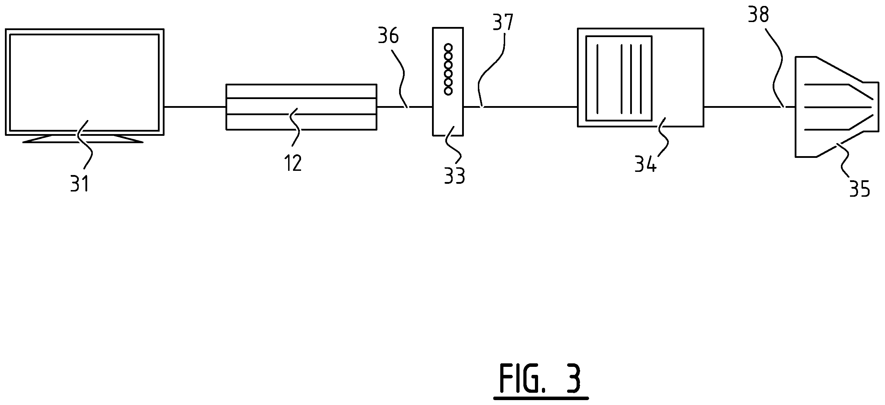

Figure 3 illustrates schematically another setup including an embodiment of a network analyser according to the present invention. The setup shows a typical Access Network IPTV end-to-end communication chain from a DSLAM (DSL Access Multiplexer) 35 over a street cabinet 34 over a DSL Gateway 33 to a Set-Top Box 12 and a TV 31. In this typical configuration, the DSL pair 37 is the weakest PHY-layer link in the communication path of the network, compared to Ethernet Cat. 5/6 cable 36 and/or GPON optical fibre 38. In this context, estimation of the real Quality of Experience of the end-user 31 (here a TV 31 displaying the streamed media file) allows an optimisation module or system, like DLM, to take decisions (e.g. using a Bayesian Network or a decision tree) and actions (once or iteratively), based on real QoS measurements without having to infer anything.

In a preferred embodiment, the quality of experience metric allows to discriminate between domain issues. For example, if visual artefacts are quantified at the Set-Top Box 12 level using the quality of experience metric as above, but no error events are encountered at the (DSL) PHY-layer (no CV, no ES, no SES, no LEFTRS, high minEFTR, etc.), it is possible to infer the domain of responsibility by not incriminating the (DSL) PHY-layer (for which the operator is responsible) but instead by pointing-out the in-house communication links (for instance when using Power-Line-Communication and/or WiFi). Thereby, the end-to-end QoE estimation can not only support the troubleshooting process but also can allow or prevent the DLM to take any actions on the DSL.

A person of skill in the art would readily recognise that steps of various above-described methods can be performed by programmed computers. Herein, some embodiments are also intended to cover program storage devices, *e.g.* digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within the scope of protection as defined by the appended claims . Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A network analyser (11) for remote diagnosis of a problem occurring in a network (N) during streaming of at least one media file to an end-user receiver (12) via said network; wherein said network analyser is communicatively coupled to said network; said network analyser comprising:

   - a collection module (21), communicatively coupled to said end-user receiver and configured for obtaining from said end-user receiver at least one media decoding statistic, pertaining to application-layer decoding of said at least one media file at said end-user receiver; and
- a processing module (22) configured for determining a quality of experience metric, based on said at least one media decoding statistic;
wherein said quality of experience metric quantitatively represents a relation between a duration of said decoding and a number of media decoding errors during said duration of said decoding.

2. The network analyser of claim 1, comprising:

- a monitoring module (23) configured for determining whether said quality of experience metric exceeds a quality threshold; and
- an optimisation module (24) configured for preventing troubleshooting of said network, if it is determined that said quality of experience metric exceeds said quality threshold.

3. The network analyser of any previous claim,
comprising a monitoring module (23) configured for, or wherein said monitoring module (23) is configured for:

- determining whether said quality of experience metric exceeds a quality threshold; and comprising an optimisation module (24) configured for, or wherein said optimisation module (24) is configured for:
- if it is determined that said quality of experience metric does not exceed said quality threshold, troubleshooting said network.

4. The network analyser of any previous claim,
wherein said network comprises a first network part and a second network part, said second network part comprising at least said end-user receiver; and
wherein said optimisation module is configured for:

- determining whether a physical-layer problem exists in said first network part; and
- if it is determined that a physical-layer problem does not exist in said first network part, preventing troubleshooting of said first network part and proposing troubleshooting of said second network part; and
- if it is determined that a physical-layer problem exists in said first network part, troubleshooting said first network part by:

- obtaining at least one physical parameter value, pertaining to said streaming via said first network part;
- locating said physical-layer problem in said first network part, based on said at least one physical parameter value; and
- adjusting at least one physical parameter corresponding to said at least one physical parameter value, in order to mitigate said located physical-layer problem.

5. The network analyser of any previous claim,
wherein said at least one media decoding statistic comprises at least one of the following:

- a number of error events, comprising a number of content frames that could not be reproduced by said end-user receiver for said at least one media file and comprising a number of content frames reproduced by said end-user receiver for said at least one media file, for which reproduced content frames information was missing and loss concealment was applied by said end-user receiver;
- a normalised number of error events, comprising said number of error events relative to a frame rate of said at least one media file; and
- a mean time between occurrences of artefacts, comprising a duration of said decoding relative to said number of error events or to said normalised number of error events, wherein said duration of said decoding comprises a number of seconds during which content frames were received for said at least one media file.

6. The network analyser of any previous claim,
wherein said at least one media decoding statistic comprises at least one first media decoding statistic pertaining to a first type of media and at least one second media decoding statistic pertaining to a second type of media;
wherein said first type of media is associated with a first importance for decoding and said second type of media is associated with a second importance for decoding which is lower than said first importance; and
wherein said first type of media and said second type of media are associated with different weighting factors indicating their respective relative importance, when determining said quality of experience metric.

7. The network analyser of any previous claim,
   wherein said quality of experience metric is representative for a single stream of at least one media file; or
   wherein said quality of experience metric is representative for a plurality of streams of at least one media file, and
   wherein optionally each stream of said plurality of streams is associated with a weighting factor indicating said
   stream's relative importance, when determining said quality of experience metric.

8. A method for remote diagnosis of a problem occurring in a network (N) during streaming of at least one media file
   to an end-user receiver (12) via said network; said method comprising:

   - obtaining (25) at least one media decoding statistic, at a computing system (11), pertaining to application-
   layer decoding of said at least one media file at said end-user receiver; and
   - determining (26) a quality of experience metric, at said computing system, based on said at least one media
   decoding statistic;
   wherein said quality of experience metric quantitatively represents a relation between a duration of said decoding
   and a number of media decoding errors during said duration of said decoding.

9. The method of claim 8, comprising at said computing system:

   - determining (27) whether said quality of experience metric exceeds a quality threshold; and
   - if it is determined that said quality of experience metric exceeds said quality threshold, preventing (28) troubleshooting of said network.

10. The method of any of the claims 8-9, comprising at said computing system:

   - determining (27) whether said quality of experience metric exceeds a quality threshold; and
   - if it is determined that said quality of experience metric does not exceed said quality threshold, troubleshooting
   (29) said network.

11. The method of any of the claims 8-10,
   wherein said network comprises a first network part and a second network part, said second network part comprising
   at least said end-user receiver; and
   wherein troubleshooting said network comprises:

   - determining whether a physical-layer problem exists in said first network part; and
   - if it is determined that a physical-layer problem does not exist in said first network part, preventing troubleshooting of said first network part and proposing troubleshooting of said second network part; and
   - if it is determined that a physical-layer problem exists in said first network part, troubleshooting said first network
   part by:

      - obtaining at least one physical parameter value, pertaining to said streaming via said first network part;
      - locating said physical-layer problem in said first network part, based on said at least one physical parameter
      value; and
      - adjusting at least one physical parameter corresponding to said at least one physical parameter value, in
      order to mitigate said located physical-layer problem.

12. The method of any of the claims 8-11,
   wherein said at least one media decoding statistic comprises at least one of the following:

   - a number of error events, comprising a number of content frames that could not be reproduced by said end-
   user receiver for said at least one media file and comprising a number of content frames reproduced by said
   end-user receiver for said at least one media file, for which reproduced content frames information was missing
   and loss concealment was applied by said end-user receiver;
   - a normalised number of error events, comprising said number of error events relative to a frame rate of said
   at least one media file; and
   - a mean time between occurrences of artefacts, comprising a duration of said decoding relative to said number
   of error events or to said normalised number of error events, wherein said duration of said decoding comprises a number of seconds during which content frames were received for said at least one media file.

13. The method of any of the claims 8-12,
    wherein said at least one media decoding statistic comprises at least one first media decoding statistic pertaining to a first type of media and at least one second media decoding statistic pertaining to a second type of media; wherein said first type of media is associated with a first importance for decoding and said second type of media is associated with a second importance for decoding which is lower than said first importance; and wherein said first type of media and said second type of media are associated with different weighting factors indicating their respective relative importance, when determining said quality of experience metric.

14. The method of any of the claims 8-13,
    wherein said quality of experience metric is representative for a single stream of at least one media file; or wherein said quality of experience metric is representative for a plurality of streams of at least one media file, and wherein optionally each stream of said plurality of streams is associated with a weighting factor indicating said stream's relative importance, when determining said quality of experience metric.

15. A computer program product comprising computer-executable instructions for performing a method when the program is run on a computer, the method comprising the steps of any one of the methods of any one of the claims 8-14.

**Patentansprüche**

1. Netzwerkanalysator (11) zur Ferndiagnose eines Problems, das in einem Netzwerk (N) während des Streamings mindestens einer Mediendatei an einen Endnutzerempfänger (12) über das Netzwerk auftritt; wobei der Netzwerkanalysator kommunikationstechnisch mit dem Netzwerk gekoppelt ist; wobei der Netzwerkanalysator umfasst:

   - ein Erfassungsmodul (21), das kommunikationstechnisch mit dem Endnutzerempfänger gekoppelt und dazu ausgelegt ist, aus dem Endnutzerempfänger mindestens eine Mediendecodierungsstatistik zu erhalten, die sich auf das Decodieren der mindestens einen Mediendatei auf der Anwendungsschicht am Endnutzerempfänger bezieht; und
   - ein Verarbeitungsmodul (22), das zum Bestimmen einer Erfahrungsqualitätsmetrik basierend auf der mindestens einen Mediendecodierungsstatistik ausgelegt ist;
   wobei die Erfahrungsqualitätsmetrik quantitativ eine Beziehung zwischen einer Dauer des Decodierens und einer Anzahl von Mediendecodierfehlern während der Dauer des Decodierens darstellt.

2. Netzwerkanalysator gemäß Anspruch 1, umfassend:

   - ein Überwachungsmodul (23), das zum Bestimmen, ob die Erfahrungsqualitätsmetrik einen Qualitätsschwellenwert überschreitet, ausgelegt ist; und
   - ein Optimierungsmodul (24), das zum Verhindern des Fehlerbehebens des Netzwerks ausgelegt ist, wenn bestimmt wird, dass die Erfahrungsqualitätsmetrik den Qualitätsschwellenwert überschreitet.

3. Netzwerkanalysator gemäß einem der vorhergehenden Ansprüche,
   umfassend ein Überwachungsmodul (23), das ausgelegt ist zum oder wobei das genannte Überwachungsmodul (23) ausgelegt ist zum:

   - Bestimmen, ob die Erfahrungsqualitätsmetrik einen Qualitätsschwellenwert überschreitet; und umfassend ein Optimierungsmodul (24), das ausgelegt ist zum oder wobei das genannte Optimierungsmodul (24) ausgelegt ist zum:
   - Fehlerbeheben des Netzwerks, wenn bestimmt wird, dass die Erfahrungsqualitätsmetrik den Qualitätsschwellenwert nicht überschreitet.

4. Netzwerkanalysator gemäß einem der vorhergehenden Ansprüche,
   wobei das Netzwerk einen ersten Netzwerkteil und einen zweiten Netzwerkteil umfasst, wobei der zweite Netzwerkteil mindestens den Endnutzerempfänger umfasst; und wobei das Optimierungsmodul ausgelegt ist zum:

   - Bestimmen, ob ein Problem auf der physikalischen Schicht im ersten Netzwerkteil besteht; und

- wenn bestimmt wird, dass ein Problem auf der physikalischen Schicht im ersten Netzwerkteil nicht besteht, Verhindern des Fehlerbehebens im ersten Netzwerkteil und Vorschlagen des Fehlerbehebens im zweiten Netzwerkteil; und

- wenn bestimmt wird, dass ein Problem auf der physikalischen Schicht im ersten Netzwerkteil besteht, Fehlerbeheben im ersten Netzwerkteil durch:

- Erhalten mindestens eines physikalischen Parameterwertes, der sich auf das Streaming über den ersten Netzwerkteil bezieht;
- Lokalisieren des Problems auf der physikalischen Schicht im ersten Netzwerkteil basierend auf dem mindestens einen physikalischen Parameterwert; und
- Einstellen mindestens eines physikalischen Parameters, der dem mindestens einen physikalischen Parameterwert entspricht, um das lokalisierte Problem auf der physikalischen Schicht zu mildern.

5. Netzwerkanalysator gemäß einem der vorhergehenden Ansprüche,
   wobei die mindestens eine Mediendecodierungsstatistik mindestens eines umfasst von:

   - einer Anzahl von Fehlerereignissen, die eine Anzahl von Inhaltsrahmen umfassen, die durch den Endnutzerempfänger für die mindestens eine Mediendatei nicht wiedergegeben werden konnten, und die eine Anzahl von Inhaltsrahmen umfassen, die durch den Endnutzerempfänger für die mindestens eine Mediendatei wiedergegeben wurden, wobei für die wiedergegebenen Inhaltsrahmen Informationen fehlten und die Verlustverdeckung durch den Endnutzerempfänger angewendet wurde;
   - einer normalisierten Anzahl von Fehlerereignissen, die die Anzahl von Fehlerereignissen relativ zu einer Rahmenrate der mindestens einen Mediendatei umfasst; und
   - einer mittleren Zeit zwischen dem Auftreten von Artefakten, die eine Dauer des Decodierens relativ zu der Anzahl von Fehlerereignissen oder zu der normalisierten Anzahl von Fehlerereignissen umfasst, wobei die Dauer des Decodierens eine Anzahl von Sekunden umfasst, während der Inhaltsrahmen für die mindestens eine Mediendatei empfangen wurden.

6. Netzwerkanalysator gemäß einem der vorhergehenden Ansprüche,
   wobei die mindestens eine Mediendecodierungsstatistik mindestens eine erste Mediendecodierungsstatistik, die sich auf einen ersten Medientyp bezieht, und mindestens eine zweite Mediendecodierungsstatistik, die sich auf einen zweiten Medientyp bezieht, umfasst;
   wobei der erste Medientyp mit einer ersten Wichtigkeit für das Decodieren verknüpft ist und der zweite Medientyp mit einer zweiten Wichtigkeit für das Decodieren, die niedriger als die erste Wichtigkeit ist, verknüpft ist; und
   wobei der erste Medientyp und der zweite Medientyp mit unterschiedlichen Gewichtungsfaktoren verknüpft sind, die ihre jeweilige relative Wichtigkeit beim Bestimmen der Erfahrungsqualitätsmetrik angeben.

7. Netzwerkanalysator gemäß einem der vorhergehenden Ansprüche,
   wobei die Erfahrungsqualitätsmetrik für einen einzelnen Strom mindestens einer Mediendatei repräsentativ ist; oder
   wobei die Erfahrungsqualitätsmetrik repräsentativ für eine Vielzahl von Strömen mindestens einer Mediendatei ist, und wobei gegebenenfalls jeder Strom der Vielzahl von Strömen mit einem Gewichtungsfaktor verknüpft ist, der die relative Wichtigkeit des Stroms beim Bestimmen der Erfahrungsqualitätsmetrik angibt.

8. Verfahren zur Ferndiagnose eines Problems, das in einem Netzwerk (N) während des Streamings mindestens einer Mediendatei über das Netzwerk an einen Endnutzerempfänger (12) auftritt, wobei das Verfahren umfasst:

   - Erhalten (25) mindestens einer Mediendecodierungsstatistik in einem Computersystem (11), die sich auf die Decodierung der mindestens einen Mediendatei auf der Anwendungsschicht am Endnutzerempfänger bezieht; und
   - Bestimmen (26) einer Erfahrungsqualitätsmetrik auf dem Computersystem basierend auf der mindestens einen Mediendecodierungsstatistik;
   wobei die Erfahrungsqualitätsmetrik quantitativ eine Beziehung zwischen einer Dauer des Decodierens und einer Anzahl von Mediendecodierfehlern während der Dauer des Decodierens darstellt.

9. Verfahren gemäß Anspruch 8, umfassend auf dem Computersystem:

   - Bestimmen (27), ob die Erfahrungsqualitätsmetrik einen Qualitätsschwellenwert überschreitet; und
   - Verhindern (28) des Fehlerbehebens im Netzwerk, wenn bestimmt wird, dass die Erfahrungsqualitätsmetrik den Qualitätsschwellenwert überschreitet.

10. Verfahren gemäß einem der Ansprüche 8-9, umfassend auf dem Computersystem:

   - Bestimmen (27), ob die Erfahrungsqualitätsmetrik einen Qualitätsschwellenwert überschreitet; und
   - Fehlerbeheben (29) im Netzwerk, wenn bestimmt wird, dass die Erfahrungsqualitätsmetrik den Qualitätsschwellenwert nicht überschreitet.

11. Verfahren gemäß einem der Ansprüche 8-10,
   wobei das Netzwerk einen ersten Netzwerkteil und einen zweiten Netzwerkteil umfasst, wobei der zweite Netzwerkteil mindestens den Endnutzerempfänger umfasst; und
   wobei das Fehlerbeheben im Netzwerk umfasst:

   - Bestimmen, ob ein Problem auf der physikalischen Schicht im ersten Netzwerkteil besteht; und
   - wenn bestimmt wird, dass ein Problem auf der physikalischen Schicht im ersten Netzwerkteil nicht besteht, Verhindern des Fehlerbehebens im ersten Netzwerkteil und Vorschlagen des Fehlerbehebens im zweiten Netzwerkteil; und
   - wenn bestimmt wird, dass ein Problem auf der physikalischen Schicht im ersten Netzwerkteil besteht, Fehlerbeheben im ersten Netzwerkteil durch:

      - Erhalten mindestens eines physikalischen Parameterwertes, der sich auf das Streaming über den ersten Netzwerkteil bezieht;
      - Lokalisieren des Problems auf der physikalischen Schicht im ersten Netzwerkteil basierend auf dem mindestens einen physikalischen Parameterwert; und
      - Einstellen mindestens eines physikalischen Parameters, der dem mindestens einen physikalischen Parameterwert entspricht, um das lokalisierte Problem auf der physikalischen Schicht zu mildern.

12. Verfahren gemäß einem der Ansprüche 8-11,
   wobei die mindestens eine Mediendecodierungsstatistik mindestens eines umfasst von:

   - einer Anzahl von Fehlerereignissen, die eine Anzahl von Inhaltsrahmen umfassen, die durch den Endnutzerempfänger für die mindestens eine Mediendatei nicht wiedergegeben werden konnten, und die eine Anzahl von Inhaltsrahmen umfassen, die durch den Endnutzerempfänger für die mindestens eine Mediendatei wiedergegeben wurden, wobei für die wiedergegebenen Inhaltsrahmen Informationen fehlten und die Verlustverdeckung durch den Endnutzerempfänger angewendet wurde;
   - einer normalisierten Anzahl von Fehlerereignissen, die die Anzahl von Fehlerereignissen relativ zu einer Rahmenrate der mindestens einen Mediendatei umfasst; und
   - einer mittleren Zeit zwischen dem Auftreten von Artefakten, die eine Dauer des Decodierens relativ zu der Anzahl von Fehlerereignissen oder zu der normalisierten Anzahl von Fehlerereignissen umfasst, wobei die Dauer des Decodierens eine Anzahl von Sekunden umfasst, während der Inhaltsrahmen für die mindestens eine Mediendatei empfangen wurden.

13. Verfahren gemäß einem der Ansprüche 8-12,
   wobei die mindestens eine Mediendecodierungsstatistik mindestens eine erste Mediendecodierungsstatistik, die sich auf einen ersten Medientyp bezieht, und mindestens eine zweite Mediendecodierungsstatistik, die sich auf einen zweiten Medientyp bezieht, umfasst;
   wobei der erste Medientyp mit einer ersten Wichtigkeit für das Decodieren verknüpft ist und der zweite Medientyp mit einer zweiten Wichtigkeit für das Decodieren, die niedriger als die erste Wichtigkeit ist, verknüpft ist; und
   wobei der erste Medientyp und der zweite Medientyp mit unterschiedlichen Gewichtungsfaktoren verknüpft sind, die ihre jeweilige relative Wichtigkeit beim Bestimmen der Erfahrungsqualitätsmetrik angeben.

14. Verfahren gemäß einem der Ansprüche 8-13,
   wobei die Erfahrungsqualitätsmetrik für einen einzelnen Strom mindestens einer Mediendatei repräsentativ ist; oder
   wobei die Erfahrungsqualitätsmetrik repräsentativ für eine Vielzahl von Strömen mindestens einer Mediendatei ist, und wobei gegebenenfalls jeder Strom der Vielzahl von Strömen mit einem Gewichtungsfaktor verknüpft ist, der die relative Wichtigkeit des Stroms beim Bestimmen der Erfahrungsqualitätsmetrik angibt.

15. Computerprogrammprodukt, das computerausführbare Anweisungen zum Durchführen eines Verfahrens umfasst, wenn das Programm auf einem Computer ausgeführt wird, wobei das Verfahren die Schritte eines der Verfahren gemäß einem der Ansprüche 8-14 umfasst.

**Revendications**

1. Analyseur de réseau (11) pour un diagnostic distant d'un problème survenant dans un réseau (N) pendant une diffusion d'au moins un fichier multimédia vers un récepteur d'utilisateur final (12) par l'intermédiaire dudit réseau ; ledit analyseur de réseau étant couplé en communication audit réseau ; ledit analyseur de réseau comprenant :

   - un module de collecte (21), couplé en communication audit récepteur d'utilisateur final et configuré pour obtenir auprès dudit récepteur d'utilisateur final au moins une statistique de décodage multimédia, appartenant à un décodage de couche application dudit au moins un fichier multimédia au niveau dudit récepteur d'utilisateur final ; et
   - un module de traitement (22) configuré pour déterminer un indicateur métrique de qualité d'expérience, sur la base de ladite au moins une statistique de décodage multimédia ;
   ledit indicateur métrique de qualité d'expérience représentant quantitativement une relation entre une durée dudit décodage et un nombre d'erreurs de décodage multimédia pendant ladite durée dudit décodage.

2. Analyseur de réseau selon la revendication 1, comprenant :

   - un module de surveillance (23) configuré pour déterminer si ledit indicateur métrique de qualité d'expérience dépasse un seuil de qualité ; et
   - un module d'optimisation (24) configuré pour empêcher un dépannage dudit réseau s'il est déterminé que ledit indicateur métrique de qualité d'expérience dépasse ledit seuil de qualité.

3. Analyseur de réseau selon l'une quelconque des revendications précédentes, comprenant un module de surveillance (23) configuré pour, ou dans lequel ledit module de surveillance (23) est configuré pour :

   - déterminer si ledit indicateur métrique de qualité d'expérience dépasse un seuil de qualité ; et comprenant un module d'optimisation (24) configuré pour, ou dans lequel ledit module d'optimisation (24) est configuré pour :
   - s'il est déterminé que ledit indicateur métrique de qualité d'expérience ne dépasse pas ledit seuil de qualité, dépanner ledit réseau.

4. Analyseur de réseau selon l'une quelconque des revendications précédentes, dans lequel ledit réseau comprend une première partie de réseau et une seconde partie de réseau, ladite seconde partie de réseau comprenant au moins ledit récepteur d'utilisateur final ; et dans lequel ledit module d'optimisation est configuré pour :

   - déterminer si un problème de couche physique existe dans ladite première partie de réseau ; et
   - s'il est déterminé qu'un problème de couche physique n'existe pas dans ladite première partie de réseau, empêcher un dépannage de ladite première partie de réseau et proposer un dépannage de ladite seconde partie de réseau ; et
   - s'il est déterminé qu'un problème de couche physique existe dans ladite première partie de réseau, dépanner ladite première partie de réseau :
   - en obtenant au moins une valeur de paramètre physique appartenant à ladite diffusion par l'intermédiaire de ladite première partie de réseau ;
   - en localisant ledit problème de couche physique dans ladite première partie de réseau, sur la base de ladite au moins une valeur de paramètre physique ; et
   - en réglant au moins un paramètre physique correspondant à ladite au moins une valeur de paramètre physique, afin d'atténuer ledit problème de couche physique localisé.

5. Analyseur de réseau selon l'une quelconque des revendications précédentes, dans lequel au moins une statistique de décodage multimédia comprend au moins une des informations suivantes :

   - un nombre d'événements d'erreur, comprenant un nombre de trames de contenu qui n'ont pas pu être reproduites par ledit récepteur d'utilisateur final pour ledit au moins un fichier multimédia et comprenant un nombre de trames de contenu reproduites par ledit récepteur d'utilisateur final pour ledit au moins un fichier multimédia, pour lesquelles une information de trames de contenu reproduites était manquante et pour lesquelles une dissimulation de perte a été appliquée par ledit récepteur d'utilisateur final ;

- un nombre normalisé d'événements d'erreur, comprenant ledit nombre d'événements d'erreur relatifs à une fréquence de trames dudit au moins un fichier multimédia ; et

- un temps moyen entre des occurrences d'artefacts, comprenant une durée dudit décodage relatif audit nombre d'événements d'erreur ou audit nombre normalisé d'événements d'erreur, ladite durée dudit décodage comprenant un nombre de secondes pendant lesquelles des trames de contenu ont été reçues pour ledit au moins un fichier multimédia.

6. Analyseur de réseau selon l'une quelconque des revendications précédentes,
dans lequel ladite au moins une statistique de décodage multimédia comprend au moins une première statistique de décodage multimédia appartenant à un premier type de média et au moins une seconde statistique de décodage multimédia appartenant à un second type de média ;
dans lequel ledit premier type de média est associé à une première importance de décodage et ledit second type de média est associé à une seconde importance de décodage qui est inférieure à ladite première importance ; et
dans lequel ledit premier type de média et ledit second type de média sont associés à différents facteurs de pondération indiquant leur importance relative respective, lors de la détermination dudit indicateur métrique de qualité d'expérience.

7. Analyseur de réseau selon l'une quelconque des revendications précédentes,
dans lequel ledit indicateur métrique de qualité d'expérience est représentatif d'un flux unique d'au moins un fichier multimédia ; ou
dans lequel ledit indicateur métrique de qualité d'expérience est représentatif d'une pluralité de flux d'au moins un fichier multimédia, et éventuellement dans lequel chaque flux de ladite pluralité de flux est associé à un facteur de pondération indiquant ladite importance relative dudit flux, lors de la détermination dudit indicateur métrique de qualité d'expérience.

8. Procédé de diagnostic distant d'un problème survenant dans un réseau (N) pendant une diffusion d'au moins un fichier multimédia vers un récepteur d'utilisateur final (12) par l'intermédiaire dudit réseau ; ledit procédé comprenant :

- l'obtention (25), au niveau d'un système informatique (11), d'au moins une statistique de décodage multimédia appartenant à un décodage de couche application dudit au moins un fichier multimédia au niveau dudit récepteur d'utilisateur final ; et
- la détermination (26) d'un indicateur métrique de qualité d'expérience, au niveau dudit système informatique, sur la base de ladite au moins une statistique de décodage multimédia ;
ledit indicateur métrique de qualité d'expérience représentant quantitativement une relation entre une durée dudit décodage et un nombre d'erreurs de décodage multimédia pendant ladite durée dudit décodage.

9. Procédé selon la revendication 8, comprenant en outre, au niveau dudit système informatique :

- la détermination (27) de si ledit indicateur métrique de qualité d'expérience dépasse un seuil de qualité ; et
- s'il est déterminé que ledit indicateur métrique de qualité d'expérience dépasse ledit seuil de qualité, l'empêchement (28) d'un dépannage dudit réseau.

10. Procédé selon l'une quelconque des revendications 8 et 9, comprenant en outre, au niveau dudit système informatique :

- la détermination (27) de si ledit indicateur métrique de qualité d'expérience dépasse un seuil de qualité ; et
- s'il est déterminé que ledit indicateur métrique de qualité d'expérience ne dépasse pas ledit seuil de qualité, le dépannage (29) dudit réseau.

11. Procédé selon l'une quelconque des revendications 8 à 10,
dans lequel ledit réseau comprend une première partie de réseau et une seconde partie de réseau, ladite seconde partie de réseau comprenant au moins ledit récepteur d'utilisateur final ; et
dans lequel ledit dépannage dudit réseau comprend :

- la détermination de si un problème de couche physique existe dans ladite première partie de réseau ; et

**EP 3 076 594 B1**

- s'il est déterminé qu'un problème de couche physique n'existe pas dans ladite première partie de réseau, l'empêchement d'un dépannage de ladite première partie de réseau et la proposition d'un dépannage de ladite seconde partie de réseau ; et
- s'il est déterminé qu'un problème de couche physique existe dans ladite première partie de réseau, le dépannage de ladite première partie de réseau :
- en obtenant au moins une valeur de paramètre physique appartenant à ladite diffusion par l'intermédiaire de ladite première partie de réseau ;
- en localisant ledit problème de couche physique dans ladite première partie de réseau, sur la base de ladite au moins une valeur de paramètre physique ; et
- en réglant au moins un paramètre physique correspondant à ladite au moins une valeur de paramètre physique, afin d'atténuer ledit problème de couche physique localisé.

12. Procédé selon l'une quelconque des revendications 8 à 11,
dans lequel au moins une statistique de décodage multimédia comprend au moins une des informations suivantes :

- un nombre d'événements d'erreur, comprenant un nombre de trames de contenu qui n'ont pas pu être reproduites par ledit récepteur d'utilisateur final pour ledit au moins un fichier multimédia et comprenant un nombre de trames de contenu reproduites par ledit récepteur d'utilisateur final pour ledit au moins un fichier multimédia, pour lesquelles une information de trames de contenu reproduites était manquante et pour lesquelles une dissimulation de perte a été appliquée par ledit récepteur d'utilisateur final ;
- un nombre normalisé d'événements d'erreur, comprenant ledit nombre d'événements d'erreur relatifs à une fréquence de trames dudit au moins un fichier multimédia ; et
- un temps moyen entre des occurrences d'artefacts, comprenant une durée dudit décodage relatif audit nombre d'événements d'erreur ou audit nombre normalisé d'événements d'erreur, ladite durée dudit décodage comprenant un nombre de secondes pendant lesquelles des trames de contenu ont été reçues pour ledit au moins un fichier multimédia.

13. Procédé selon l'une quelconque des revendications 8 à 12,
dans lequel ladite au moins une statistique de décodage multimédia comprend au moins une première statistique de décodage multimédia appartenant à un premier type de média et au moins une seconde statistique de décodage multimédia appartenant à un second type de média ;
dans lequel ledit premier type de média est associé à une première importance de décodage et ledit second type de média est associé à une seconde importance de décodage qui est inférieure à ladite première importance ; et
dans lequel ledit premier type de média et ledit second type de média sont associés à différents facteurs de pondération indiquant leur importance relative respective, lors de la détermination dudit indicateur métrique de qualité d'expérience.

14. Procédé selon l'une quelconque des revendications 8 à 13,
dans lequel ledit indicateur métrique de qualité d'expérience est représentatif d'un flux unique d'au moins un fichier multimédia ; ou
dans lequel ledit indicateur métrique de qualité d'expérience est représentatif d'une pluralité de flux d'au moins un fichier multimédia, et éventuellement dans lequel chaque flux de ladite pluralité de flux est associé à un facteur de pondération indiquant ladite importance relative dudit flux, lors de la détermination dudit indicateur métrique de qualité d'expérience.

15. Produit de programme informatique comprenant des instructions exécutables par ordinateur pour réaliser un procédé quand le programme est exécuté sur un ordinateur, le procédé comprenant les étapes de l'un quelconque des procédés selon l'une quelconque des revendications 8 à 14.

FIG. 1

EP 3 076 594 B1

FIG. 2A

FIG. 2B

EP 3 076 594 B1

## FIG. 3

## REFERENCES CITED IN THE DESCRIPTION

**Patent documents cited in the description**

- EP 2827535 A1
- WO 200699223 A2